# EUROPEAN PATENT SPECIFICATION

(11) **EP 2 924 797 B1**
(45) Date of publication and mention of the grant of the patent: **24.05.2017**
(21) Application number: 13857306.8
(22) Date of filing: 05.11.2013
(51) Int. Cl.: H01M 10/60, H01M 10/48, H01M 10/0525, B60L 11/18

(54) **APPARATUS FOR CONTROLLING TEMPERATURE OF BATTERY**
VORRICHTUNG ZUR TEMPERATURREGELUNG EINER BATTERIE
APPAREIL DE RÉGULATION DE LA TEMPÉRATURE D'UNE BATTERIE

(30) Priority: 22.11.2012 KR 20120133260
(43) Date of publication of application: 30.09.2015
(73) Proprietor: Korea Automotive Technology Institute, Chungcheongnam-do 330-912 (KR)
(72) Inventor: SUNG, Si Young, Cheonan-si Chungcheongnam-do 330-769 (KR); HAN, Beom Suck, Suwon-si Gyeonggi-do 443-370 (KR); HAN, Chang Su, Cheonan-si Chungcheongnam-do 330-260 (KR)
(74) Representative: Zacco Sweden AB
(86) International application number: PCT/KR2013/009945
(87) International publication number: WO 2014/081138

(56) References cited:
- JP-A- 2010 192 333
- JP-A- 2012 226 895
- KR-A- 20110 090 236
- KR-A- 20120 014 363
- KR-U- 20100 011 256

## Description

### [Technical Field]

The present invention relates to an apparatus for controlling battery temperature, and, more particularly, to an apparatus for controlling battery temperature capable of controlling temperature of a battery through endothermic reaction or exothermic reaction in phase transformation of a supersaturated liquid refrigerant and through cooling by the supersaturated liquid refrigerant.

### [Background Art]

Recently, as environmental destruction and pollution problems become more critical, to solve these, research and development of alternative energy sources is underway all over the world. As part of these developments of alternative energy sources, development of battery systems is ongoing.

As a typical battery system, a lithium ion (Li-ion) battery has been researched and developed and put to practical use. A lithium ion battery is fabricated by introducing a non-aqueous electrolyte containing a lithium salt and an organic solvent into an electrode structure composed of a cathode, an anode, and a separator interposed between the cathode and the anode, and generates electrical energy through oxidation and reduction upon intercalation/deintercalation of lithium ions into/from the cathode and the anode.

Such a lithium ion battery uses carbonate organic solvents, particularly, alkylene carbonates such as propylene carbonate or ethylene carbonate as an organic solvent constituting a non-aqueous electrolyte, and is used as a battery for electric vehicles such as hybrid automobiles, plug-in hybrid automobiles, electric automobiles, and the like.

One example of the related art is disclosed in Korean Patent Publication No. 10-2012-0050799 (published on May 21, 2012) entitled "Battery cell assembly having heat sink attached thereto".

### [Disclosure]

### [Technical Problem]

When conventional lithium ion batteries are used in vehicles such as electric vehicles, the battery is required to maintain a certain temperature or to be cooled to an appropriate temperature in order to achieve normal supply of battery power in extreme regions, such as extremely cold regions or extremely hot regions.

Generally, cooling methods for lithium ion batteries include water cooling and air cooling. Despite having relatively high cooling efficiency, a water cooling system has problems of difficulty in weight reduction and inconvenience of device replacement due to a non-detachable structure thereof. On the other hand, despite good replaceability, an air cooling system has difficulty in cooling to a desired temperature, thereby causing deterioration in heat control efficiency.

Moreover, in order to maintain efficiency of the battery at a constant level in an extremely cold region or in winter, there is a need for a separate preheater such as a thermoelectric element, which requires separate additional power and has poor replaceability while causing inevitable increase in weight and volume.

Further, when a vehicle such as an electric vehicle is provided with both a preheater and a cooler, weight and volume of the vehicle are unavoidably increased, thereby causing deterioration in energy efficiency.

The present invention has been conceived to solve such problems in the art and it is an object of the present invention to provide an apparatus for controlling battery temperature, which is capable of cooling a battery such as a lithium ion battery by circulating a liquid refrigerant and controlling temperature of the battery through an endothermic reaction or an exothermic reaction in phase transformation of the supersaturated liquid refrigerant.

It is another object of the present invention to allow functions of preheating or cooling a battery such as a lithium ion battery to be achieved using the same supersaturated liquid refrigerant whether in cold seasons or hot seasons and whether in cold areas or hot areas, thereby improving charge/discharge efficiency of the battery.

It is a further object of the present invention to allow temperature of a battery such as a lithium ion battery to be maintained at a level suitable for operation of the battery, while extending lifespan of the battery.

### [Technical Solution]

In accordance with one aspect of the present invention, an apparatus for controlling battery temperature includes: at least one temperature sensor sensing temperature of a battery pack and generating a temperature sensing signal; a refrigerant pipe extending between plural battery cells contained in the battery pack to allow a supersaturated liquid refrigerant to be circulated therethrough; a refrigerant circulation driving unit circulating the supersaturated liquid refrigerant through the refrigerant pipe to cool the battery pack upon increase in temperature of the battery pack; and a controller controlling the refrigerant circulation driving unit to operate when detecting increase in temperature of the battery pack in response to the temperature sensing signal from the at least one temperature sensor.

The at least one temperature sensor may be provided in plural number to individually detect respective temperatures of the plural battery cells, and the controller may calculate an average temperature value from plural respective temperature sensing signals generated by the plurality of temperature sensors and detect increase in temperature of the battery pack based on the average temperature value.

The apparatus may further include: inlet side and outlet side on/off valves placed at pipe inlet and outlet sides of connections between the refrigerant circulation driving unit and the refrigerant pipe, respectively; and a plurality of on-off valves respectively placed at entry sides of extensions of the refrigerant pipe extending between the plural battery cells.

The controller may set multiple successive modes based on temperature obtained from the temperature sensing signal from the at least one temperature sensor and controls opening/closing of the inlet side on/off valve, the outlet side on/off valve, and the plurality of on/off valves in a differential manner according to each of the multiple modes.

The supersaturated liquid refrigerant may include at least one of a sodium acetate (CH₃COONa) solution and a sodium thiosulfate (Na₂S₂O₃) solution.

In accordance with another aspect of the present invention, an apparatus for controlling battery temperature includes: at least one temperature sensor sensing a temperature of a battery pack and generating a temperature sensing signal; a refrigerant pipe extending between plural battery cells contained in the battery pack to allow a supersaturated liquid refrigerant to be circulated therethrough; a refrigerant circulation driving unit transmitting the supersaturated liquid refrigerant to an inside of the refrigerant pipe to preheat the battery pack through phase transformation of the supersaturated liquid refrigerant upon drop in temperature of the battery pack; an electric shock applying unit applying an electric shock voltage to the refrigerant pipe to generate static electricity by which the supersaturated liquid refrigerant is transformed from a liquid phase to a solid phase to generate heat; and a controller controlling the refrigerant circulation driving unit to operate and controlling the electric shock applying unit to generate the electric shock voltage upon detecting decrease in temperature of the battery pack in response to the temperature sensing signal from the at least one temperature sensor.

The at least one temperature sensor may be provided in plural number to individually detect respective temperatures of the plural battery cells, and the controller may calculate an average temperature value from plural temperature sensing signals generated by the plurality of temperature sensors and detect decrease in temperature of the battery pack based on the average temperature value.

The apparatus may further include: inlet side and outlet side on/off valves placed at pipe inlet and outlet sides of connections between the refrigerant circulation driving unit and the refrigerant pipe, respectively; and a plurality of on/off valves respectively placed at entry sides of extensions of the refrigerant pipe extending between the plural battery cells.

The controller may set multiple successive modes based on temperature obtained from the temperature sensing signal from the at least one temperature sensor and controls opening/closing of the inlet side valve, the outlet side valve, and the plural on-off valves in a differential manner according to each of the multiple modes.

The supersaturated liquid refrigerant may include one of a sodium acetate (CH₃COONa) solution and a sodium thiosulfate (Na₂S₂O₃) solution.

The refrigerant pipe may be provided therein with heating wires along extensions of the pipe.

### [Advantageous Effects]

According to the present invention, temperature of a battery such as a lithium ion battery can be adjusted through endothermic reaction or exothermic reaction in phase-transformation of a supersaturated liquid refrigerant or in cooling of the supersaturated liquid refrigerant in a liquid state, thereby eliminating a need for a preheating device that requires additional electric energy for preheating the battery, thereby enabling significant reduction in weight and volume while allowing self-preheating without additional energy loss. In addition, in terms of battery cooling functions, the apparatus for controlling battery temperature according to the present invention has merits of both water cooling and air cooling, thereby maximizing cooling efficiency.

Further, according to the present invention, temperature of a battery can be adjusted to a proper level using the same supersaturated liquid refrigerant whether in cold seasons or hot seasons and in cold areas or hot areas, thereby improving charge/discharge efficiency of a battery while extending lifespan of the battery.

### [Description of Drawings]

Fig. 1 is a view of an apparatus for controlling battery temperature according to one embodiment of the present invention, which is applied to a battery.
Fig. 2 is a view showing configuration of the apparatus for controlling battery temperature according to the embodiment of the present invention.
Figs. 3a to 3c are views of a refrigerant circulation path through a refrigerant pipe in a battery pack for each mode in the apparatus for controlling battery temperature according to the embodiment of the present invention.
Fig. 4 is a flowchart illustrating operation of the apparatus for controlling battery temperature according to the embodiment of the present invention.

### [Best Mode]

Hereinafter, exemplary embodiments of the present invention will be described in detail with reference to the accompanying drawings.

It should be noted that the drawings are not to precise scale and may be exaggerated in thickness of lines or size of components for descriptive convenience and clarity only. In addition, the terms used herein are defined by taking functions of the present invention into account and can be changed according to user or operator custom or intention. Therefore, definition of the terms should be made according to the overall disclosure set forth herein.

### [Mode for Invention]

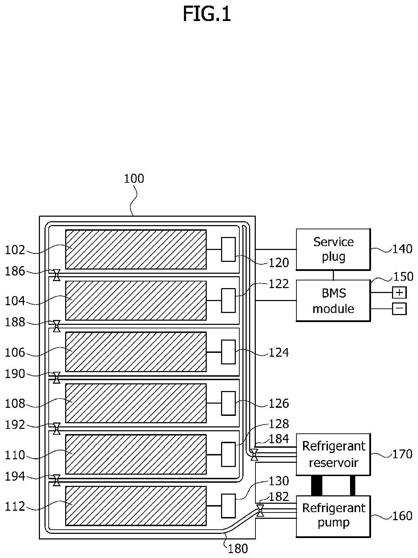

Fig. 1 is a view of an apparatus for controlling battery temperature according to one embodiment of the invention, which is applied to a battery.

Although the apparatus for controlling battery temperature according to this embodiment may also be used in various batteries other than a lithium ion battery, the present invention will be described by way of example wherein the apparatus is used in a lithium ion battery.

Referring to Fig. 1, the apparatus for controlling battery temperature according to the embodiment includes first to sixth temperature sensors 120, 122, 124, 126, 128, 130, a service plug 140, a battery management system module (BMS module) 150, a refrigerant pump 160, a refrigerant reservoir 170, a refrigerant pipe 180, and first to seventh on/off valves 182, 184, 186, 188, 190, 192, 194.

The first to sixth temperature sensors 120, 122, 124, 126, 128, 130 are allocated to first to sixth lithium ion battery cells 102, 104, 106, 108, 110, 112 constituting a lithium ion battery pack 100, respectively, to detect temperature of the respective lithium ion battery cells 102, 104, 106, 108, 110, 112 and to generate first to sixth temperature sensing signals corresponding thereto.

The refrigerant pump 160 is connected to an outlet of the refrigerant pipe 180 and performs pumping operation for circulating a supersaturated liquid refrigerant between the first to sixth lithium ion battery cells 102, 104, 106, 108, 110, 112 in the lithium ion battery pack 100 through the refrigerant pipe 180.

The refrigerant reservoir 170 is connected to an inlet of the refrigerant pipe 180 and serves to receive and store the supersaturated liquid refrigerant circulated between the first to sixth lithium ion battery cells 102, 104, 106, 108, 110, 112 through respective extensions of the refrigerant pipe 180.

The refrigerant pump 160 and the refrigerant reservoir 170 allow the supersaturated liquid refrigerant to be circulated through the refrigerant pipe 180, and may be collectively referred to as a refrigerant circulation driving unit.

The refrigerant pipe 180 is connected at the outlet thereof to the refrigerant pump 160 and connected at the inlet thereof to the refrigerant reservoir 170, and extends between the first and sixth lithium ion battery cells 102, 104, 106, 108, 110, 112 via the first to seventh on/off valves 182, 184, 186, 188, 190, 192, 194 to allow the supersaturated liquid refrigerant to be circulated therethrough.

The refrigerant pipe 180 is provided therein with heating wires along the extensions of the pipe, wherein the heating wire is used to preheat the lithium ion battery cells 102, 104, 106, 108, 110, 112 in cold seasons together with a main preheating operation through phase transformation of the supersaturated liquid refrigerant into a solid phase.

Here, the supersaturated liquid refrigerant refers to a material which remains in a liquid phase in its normal state and undergoes phase transformation from a liquid phase to a solid phase, and is composed of one of a sodium acetate (CH₃COONa) solution having a phase transformation temperature of 58°C and a sodium thiosulfate (Na₂S₂O₃) solution having a phase transformation temperature of 48°C.

The first to seventh on/off valves 182, 184, 186, 188, 190, 192, 194 individually perform opening/closing operation to control a flow of the supersaturated liquid refrigerant circulating through the refrigerant pipe 180.

The first on/off valve 182 is placed at the outlet side of the refrigerant pipe 180 connected to the refrigerant pump 160 and the second on/off valve 184 is placed at the inlet side of the refrigerant pipe 180 connected to the refrigerant reservoir 170.

In addition, the third on/off valve 186 is placed at an entry side of an extension of the refrigerant pipe 180 extending between the first lithium ion battery cell 102 and the second lithium ion battery cell 104; the fourth on/off valve 188 is placed at an entry side of an extension of the refrigerant pipe 180 extending between the second lithium ion battery cell 104 and the third lithium ion battery cell 106; and the fifth on/off valve 190 is placed at an entry side of an extension of the refrigerant pipe 180 extending between the third lithium ion battery cell 106 and the fourth lithium ion battery cell 108.

The sixth on/off valve 192 is placed at an entry side of an extension of the refrigerant pipe 180 extending between the fourth lithium ion battery cell 108 and the fifth lithium ion battery cell 110, and the seventh on/off valve 194 is placed at an entry side of an extension of the refrigerant 180 extending between the fifth lithium ion battery cell 110 and the sixth lithium ion battery cell 112.

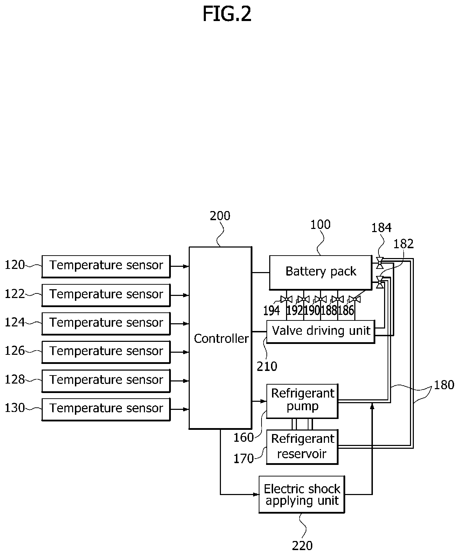

Next, Fig. 2 is a view showing configuration of the apparatus for controlling battery temperature according to the embodiment of the invention.

As shown in Fig. 2, the apparatus for controlling battery temperature according to this embodiment includes a controller 200, a valve driving unit 210, and an electric shock applying unit 220.

The controller 200 receives the first to sixth temperature sensing signals from the first to sixth temperature sensors 120, 122, 124, 126, 128, 130, respectively, to detect temperature change of the first to sixth lithium ion battery cells 102, 104, 106, 108, 110, 112, and calculates an average temperature value from the first to sixth temperature sensing signals. When the average temperature value falls into a range in which operational efficiency of the battery is deteriorated, the controller controls the refrigerant pump 160 to operate while controlling the valve driving unit 210 to operate whereby the first to seventh on/off valves 182, 184, 186, 188, 190, 192, 194 individually perform opening/closing operation depending upon temperature conditions, such that the supersaturated liquid refrigerant is circulated in a liquid phase to cool the lithium ion battery pack 100, or the supersaturated liquid refrigerant is subjected to phase transformation into a solid phase through application of an electric shock voltage by the electric shock applying unit 220 to preheat the lithium ion battery pack 100.

On the other hand, when the average temperature value obtained from the first to sixth temperature sensing signals is less than or equal to a predetermined cold season-mode temperature, the controller 200 controls the refrigerant pump 160 to operate and allows the electric shock applying unit 220 to apply an electric shock voltage to the supersaturated liquid refrigerant in the refrigerant pipe 180 to preheat the lithium ion battery pack 100, wherein opening/closing of the first to the seventh on/off valves 182, 184, 186, 188, 190, 192, 194 is controlled in a differential manner in proportion to degree of decrease in the average temperature value.

In other words, the controller 200 sets multiple modes including a basic mode, an intermediate mode, and a lowest mode, divided according to a degree of decrease in the average temperature value. Specifically, when the average temperature value is less than or equal to the cold season-mode temperature, the controller initially sets the basic mode; when the average temperature value is less than or equal to the cold season-mode temperature and less than a mode setting temperature of the basic mode, the controller sets the intermediate mode; and when the average temperature value is less than a mode setting temperature of the intermediate mode, the controller sets the lowest mode.

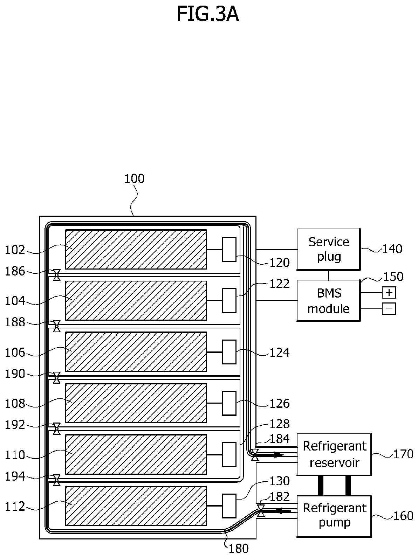

As shown in Fig. 3a, when the basic mode is set, the controller 200 opens only the first on/off valve 182 at the outlet side of the refrigerant pipe 180 connected to the refrigerant pump 160 and the second on/off valve 184 at the inlet side of the refrigerant pipe 180 connected to the refrigerant reservoir 170 among the first to seventh on/off valves 182, 184, 186, 188, 190, 192, 194 such that a refrigerant circulation cycle is established only by an inner peripheral region of the lithium ion battery pack 100. Further, the controller 200 allows the electric shock applying unit 220 to apply an electric shock voltage to the supersaturated liquid refrigerant such that heat generated through exothermic reaction in phase transformation of the supersaturated liquid refrigerant from a liquid phase to a solid phase is transmitted to the lithium ion battery pack 100 to preheat the battery pack.

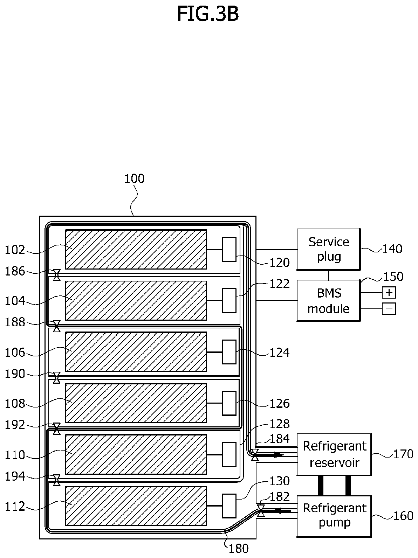

As shown in Fig. 3b, when the intermediate mode is set, the controller 200 opens the fourth on/off valve 188 at an entry side of an extension of the refrigerant pipe 180 extending between the second lithium ion battery cell 104 and the third lithium ion battery cell 106 and the sixth on/off valve 192 at an entry side of an extension of the refrigerant pipe 180 extending between the fourth lithium ion battery cell 108 and the fifth lithium ion battery cell 110 as well as the first on/off valve 182 at the outlet side of the refrigerant pipe 180 and the second on/off valve 184 at the inlet side of the refrigerant pipe 180 among the first to seventh on/off valves 182, 184, 186, 188, 190, 192, 194, such that a refrigerant circulation cycle is formed at only half of the entire battery sell section including the first to sixth lithium ion battery cells 102, 104, 106, 108, 110, 112. In addition, the controller 200 allows the electric shock applying unit 220 to apply an electric shock voltage to the supersaturated liquid refrigerant such that heat generated by the exothermic reaction upon phase transformation of the supersaturated liquid refrigerant from a liquid phase to a solid phase is transmitted to the lithium ion battery pack 100 to preheat the battery pack.

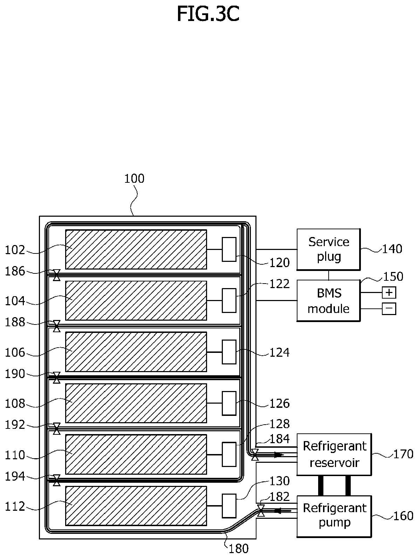

As shown in Fig. 3c, when the lowest mode is set, the controller 200 opens all of the first to seventh on/off valves 182, 184, 186, 188, 190, 192, 194, such that a refrigerant circulation cycle is formed along all the extensions of the refrigerant pipe 180 for the first to sixth lithium ion battery cells 102, 104, 106, 108, 110, 112. In addition, the controller 200 allows the electric shock applying unit 220 to apply an electric shock voltage to the supersaturated liquid refrigerant such that heat generated by the exothermic reaction upon phase transformation of the supersaturated liquid refrigerant from a liquid phase to a solid phase is transmitted to the lithium ion battery pack 100 to preheat the battery pack.

Further, when the average temperature value obtained from the first to sixth temperature sensing signals is higher than or equal to a predetermined cooling-mode temperature, the controller 200 controls the refrigerant pump 160 to operate to cool the lithium ion battery pack 100, wherein opening/closing of the first to seventh on/off valves 182, 184, 186, 188, 190, 192, 194 is controlled in a differential manner in proportion to degree of increase of the average temperature value.

In other words, the controller 200 sets multiple modes including a basic mode, an intermediate mode, and a highest mode, divided according to the degree of increase in the average temperature value. Specifically, when the average temperature value is higher than or equal to the cooling-mode temperature, the controller initially sets the basic mode; when the average temperature value is higher than or equal to the cooling-mode temperature and exceeds a mode setting temperature of the basic mode, the controller sets the intermediate mode; and, when the average temperature value exceeds a mode setting temperature of the intermediate mode, the controller sets the highest mode.

As shown in Fig. 3a, when the basic mode is set, the controller 200 opens only the first on/off valve 182 at the outlet side of the refrigerant pipe 180 connected to the refrigerant pump 160 and the second on/off valve 184 at the inlet side of the refrigerant pipe 180 connected to the refrigerant reservoir 170 among the first to seventh on/off valves 182, 184, 186, 188, 190, 192, 194, such that a refrigerant circulation cycle is established by only the inner peripheral region of the lithium ion battery pack 100. Further, the controller 200 continuously drives the refrigerant pump 160 such that the supersaturated liquid refrigerant in the refrigerant pipe 180 is circulated to cool the lithium ion battery pack 100, while remaining in liquid phase.

As shown in Fig. 3b, when the intermediate mode is set, the controller 200 opens the fourth on/off valve 188 at the entry side of the extension of the refrigerant pipe 180 extending between the second lithium ion battery cell 104 and the third lithium ion battery 106 and the sixth on/off valve 192 at the entry side of the extension of the refrigerant pipe 180 extending between the fourth lithium ion battery cell 108 and the fifth lithium ion battery 110 as well as the first on/off valve 182 at the outlet side of the refrigerant pipe 180 and the second on/off valve 184 at the inlet side of the refrigerant pipe 180 among the first to seventh on/off valves 182, 184, 186, 188, 190, 192, 194, such that a refrigerant circulation cycle is formed at only half of the entire battery cell section including the first to sixth lithium ion battery cells 102, 104, 106, 108, 110, 112. Further, the controller 200 continuously drives the refrigerant pump 160 such that the supersaturated liquid refrigerant in the refrigerant pipe 180 is circulated to cool the lithium ion battery pack 100, while remaining in liquid phase.

As shown in Fig. 3c, when the highest mode is set, the controller 200 opens all of the first to seventh on/off valves 182, 184, 186, 188, 190, 192, 194, such that a refrigerant circulation cycle is generated along all the extensions of the refrigerant pipe 180 for the first to sixth lithium ion battery cells 102, 104, 106, 108, 110, 112. Further, the controller 200 continuously drives the refrigerant pump 160 such that the supersaturated liquid refrigerant in the refrigerant pipe 180 is circulated to cool the lithium ion battery pack 100, while remaining in liquid phase.

The valve driving unit 210 individually opens or closes the first to seventh on/off valves 182, 184, 186, 188, 190, 192, 194 under the control of the controller 200 in accordance with the basic mode, the intermediate mode, the lowest mode, or the highest mode.

The electric shock applying unit 220 applies an electric shock voltage for generating static electricity to the refrigerant pipe 180 under the operational activation control of the controller 200.

Here, the electric shock voltage generated by the electric shock applying unit 220 only needs to have a voltage value capable of generating static electricity similar to static electricity typically generated under natural conditions.

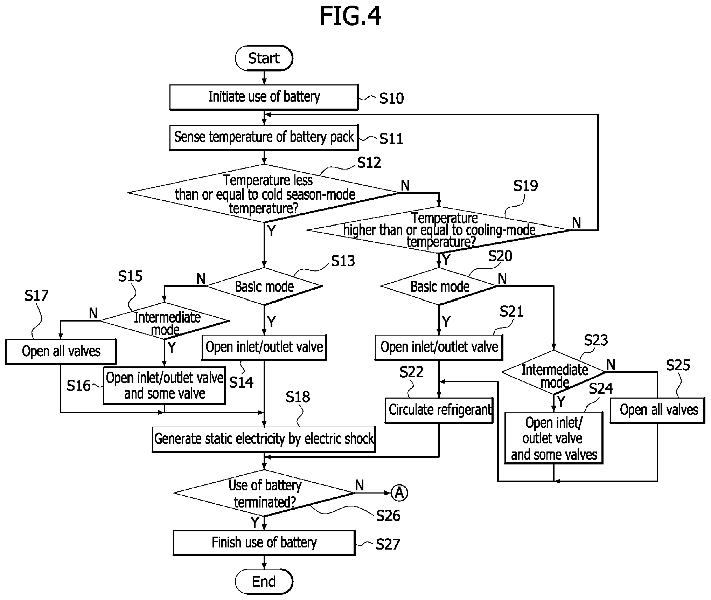

Next, operation of the apparatus for controlling battery temperature according to the present invention will be described in detail with reference to a flowchart in Fig. 4.

Fig. 4 is a flowchart illustrating the operation of the apparatus for controlling battery temperature according to the present invention.

First, in operation of a power consumption system such as an electric vehicle provided with the lithium ion battery pack 100, when use of battery power is initiated (S10), the controller 200 senses temperature conditions of the first to sixth lithium ion battery cells 102, 104, 106, 108, 110, 112 constituting the battery pack 100 through the respective temperature sensors 120, 122, 124, 126, 128, 130 (S11).

Then, the controller 200 converts the temperature sensing signals generated by the first to sixth temperature sensors 120, 122, 124, 126, 128, 130 into an average temperature value and determines whether the average temperature value is less than or equal to a predefined cold season-mode temperature (S12).

As a result, when it is determined that the average temperature value is less than or equal to the predefined cold season-mode temperature, the controller 200 determines whether the average temperature value is a temperature value corresponding to the basic mode (S13).

As a result, when it is determined that the average temperature value is a temperature value corresponding to the basic mode, as shown in Fig. 3a, the controller 200 opens only the first on/off valve 182 at the outlet side of the refrigerant pipe 180 connected to the refrigerant pump 160 and the second on/off valve 184 at the inlet side of the refrigerant pipe 180 connected to the refrigerant reservoir 170 among the first to seventh on/off valves 182, 184, 186, 188, 190, 192, 194 such that a refrigerant circulation cycle is established only by an inner peripheral region of the lithium ion battery pack 100; and drives the refrigerant pump 160 for the supersaturated liquid refrigerant to be moved along the circulation cycle of the refrigerant pipe 180 (S14).

On the other hand, when it is determined in S 13 that the average temperature value is not the temperature value corresponding to the basic mode, the controller 200 determines whether the average temperature value is a temperature value corresponding to the intermediate mode (S15).

As a result, when it is determined that the average temperature value is the temperature value corresponding to the intermediate mode, as shown in Fig. 3b, the controller 200 opens the fourth on/off valve 188 at the entry side of the extension of the refrigerant pipe 180 extending between the second lithium ion battery cell 104 and the third lithium ion battery cell 106 and the sixth on/off valve 192 at the entry side of the extension of the refrigerant pipe 180 extending between the fourth lithium ion battery cell 108 and the fifth lithium ion battery cell 110 as well as the first on/off valve 182 at the outlet side of the refrigerant pipe 180 and the second on/off valve 184 at the inlet side of the refrigerant pipe 180; and drives the refrigerant pump 160 for the supersaturated liquid refrigerant to be moved along the circulation cycle of the refrigerant pipe 180 (S16).

Further, when it is determined in S15 that the average temperature value is not the temperature value corresponding to the intermediate mode, the controller 200 determines that the average temperature value is a temperature value corresponding to the lowest mode, and opens all of the first to seventh valves 182, 184, 186, 188, 190, 192, 194 while driving the refrigerant pump 160 for the supersaturated liquid refrigerant to be moved along the circulation cycle of the refrigerant pipe 180 (S 17).

After S 14, S16, or S17, the controller 200 allows the electric shock applying unit 220 to apply an electric shock voltage for generating static electricity to the refrigerant pipe 180, whereby heat generated by phase transformation of the supersaturated liquid refrigerant filled in the refrigerant pipe 180 from a liquid phase to a solid phase is transmitted to an inside of the lithium ion battery pack 100, thereby preheating the battery pack (S18).

On the other hand, when it is determined in S12 that the average temperature value is neither less than or equal to the predetermined cold season-mode temperature, the controller 200 determines whether the average temperature value is higher than or equal to the predetermined cooling-mode temperature (S19).

As a result, when it is determined that the average temperature value is higher than or equal to the predefined cooling-mode temperature, the controller 200 determines whether the average temperature value is a temperature value corresponding to the basic mode (S20).

As a result, when it is determined that the average temperature value is the temperature value corresponding to the basic mode, as shown in Fig. 3a, the controller 200 opens only the first on/off valve 182 at the outlet side of the refrigerant pipe 180 connected to the refrigerant pump 160 and the second on/off valve 184 at the inlet side of the refrigerant pipe 180 connected to the refrigerant reservoir 170 such that a refrigerant circulation cycle is established only by an inner peripheral region of the lithium ion battery pack 100 (S21); and continuously drives the refrigerant pump 160 for the supersaturated liquid refrigerant to be circulated along the circulation cycle of the refrigerant pipe 180 to cool the lithium ion battery pack 100 (S22).

On the other hand, when it is determined in S20 that the average temperature value is not the temperature value corresponding to the basic mode, the controller 200 determines whether the average temperature value is a temperature value corresponding to the intermediate mode (S23).

As a result, when it is determined that the average temperature value is the temperature value corresponding to the intermediate mode, as shown in Fig. 3b, the controller 200 opens the fourth on/off valve 188 at the entry side of the extension of the refrigerant pipe 180 extending between the second lithium ion battery cell 104 and the third lithium ion battery cell 106 and the sixth on/off valve 192 at the entry side of the extension of the refrigerant pipe 180 extending between the fourth lithium ion battery cell 108 and the fifth lithium ion battery cell 110 as well as the first on/off valve 182 at the outlet side of the refrigerant pipe 180 and the second on/off valve 184 at the inlet side of the refrigerant pipe 180 (S24); and the operation proceeds to S22, whereby the controller 200 continuously drives the refrigerant pump 160 for the supersaturated liquid refrigerant to be circulated along the circulation cycle of the refrigerant pipe 180 to cool the lithium ion battery pack 100.

Further, when it is determined in S23 that the average temperature value is not the temperature value corresponding to the intermediate mode, the controller 200 determines that the average temperature value is a temperature value corresponding to the highest mode and opens all of the first to seventh valves 182, 184, 186, 188, 190, 192, 194 (S25). Thereafter, the operation proceeds to S22 whereby the controller 200 continuously drives the refrigerant pump 160 for the supersaturated liquid refrigerant to be circulated along the circulation cycle of the refrigerant pipe 180 to cool the lithium ion battery pack 100.

Next, after S18 or S22, the controller 200 determines whether use of the lithium ion battery pack 100 is terminated (S26).

As a result, when use of the lithium ion battery pack 100 is determined to be terminated, the controller cancels the mode for preheating or cooling the lithium ion battery 100 and finishes use of the battery (S27).

On the other hand, when it is determined in S26 that use of the lithium ion battery pack 100 is not terminated, the operation returns to S 11.

Although some embodiments have been described herein, it should be understood that these embodiments are provided for illustration only and are not to be construed in any way as limiting the present invention, and that various modifications, changes, alterations, and equivalent embodiments can be made by those skilled in the art without departing from the scope of the invention. The scope of the present invention should be defined by the appended claims and equivalents thereof

## Claims

1. An apparatus for controlling battery temperature, comprising:
at least one temperature sensor sensing temperature of a battery pack and generating a temperature sensing signal;
a refrigerant pipe extending between plural battery cells contained in the battery pack to allow a supersaturated liquid refrigerant to be circulated therethrough;
a refrigerant circulation driving unit circulating the supersaturated liquid refrigerant through the refrigerant pipe to cool the battery pack upon increase in temperature of the battery pack; and
a controller controlling the refrigerant circulation driving unit to operate upon detecting increase in temperature of the battery pack in response to the temperature sensing signal from the at least one temperature sensor.

2. The apparatus according to claim 1, wherein the at least one temperature sensor is provided in plural number to individually detect respective temperatures of the plural battery cells.

3. The apparatus according to claim 2, wherein the controller calculates an average temperature value from plural respective temperature sensing signals generated by the plural temperature sensors and detects increase in temperature of the battery pack based on the average temperature value.

4. The apparatus according to claim 1, further comprising:
inlet side and outlet side on-off valves placed at pipe inlet and outlet sides of connections between the refrigerant circulation driving unit and the refrigerant pipe, respectively; and
a plurality of on-off valves respectively placed at entry sides of extensions of the refrigerant pipe extending between the plural battery cells.

5. The apparatus according to claim 4, wherein the controller sets multiple successive modes based on temperature obtained from the temperature sensing signal from the at least one temperature sensor and individually controls opening/closing of the inlet side on/off valve, the outlet side on/off valve, and the plurality of on/off valves according to each of the multiple modes.

6. The apparatus according to claim 1, wherein the supersaturated liquid refrigerant comprises one of a sodium acetate (CH₃COONa) solution and a sodium thiosulfate (Na₂S₂O₃) solution.

7. An apparatus for controlling battery temperature comprising:
at least one temperature sensor sensing a temperature of a battery pack and generating a temperature sensing signal;
a refrigerant pipe extending between plural battery cells contained in the battery pack to allow a supersaturated liquid refrigerant to be circulated therethrough;
a refrigerant circulation driving unit transmitting the supersaturated liquid refrigerant to an inside of the refrigerant pipe to preheat the battery pack through phase transformation of the supersaturated liquid refrigerant upon drop in temperature of the battery pack;
an electric shock applying unit applying an electric shock voltage to the refrigerant pipe to generate static electricity by which the supersaturated liquid refrigerant is transformed from a liquid phase to a solid phase to generate heat; and
a controller controlling the refrigerant circulation driving unit to operate and controlling the electric shock applying unit to generate the electric shock voltage upon detecting decrease in temperature of the battery pack in response to the temperature sensing signal from the at least one temperature sensor.

8. The apparatus according to claim 7, wherein the at least one temperature sensor is provided in plural number to individually detect respective temperatures of the plural battery cells.

9. The apparatus according to claim 8, wherein the controller calculates an average temperature value from plural temperature sensing signals generated by the plural temperature sensors and detects decrease in temperature of the battery pack based on the average temperature value.

10. The apparatus according to claim 7, further comprising:
inlet side and outlet side on/off valves placed at pipe inlet and outlet sides of connections between the refrigerant circulation driving unit and the refrigerant pipe, respectively; and
a plurality of on/off valves respectively placed at entry sides of extensions of the refrigerant pipe extending between the plural battery cells.

11. The apparatus according to claim 10, wherein the controller sets multiple successive modes based on temperature obtained from the temperature sensing signal from the at least one temperature sensor and individually controls opening/closing of the inlet side valve, the outlet side valve, and the plural on-off valves according to each of the multiple modes.

12. The apparatus according to claim 7, wherein the supersaturated liquid refrigerant one of a sodium acetate (CH₃COONa) solution and a sodium thiosulfate (Na₂S₂O₃) solution.

13. The apparatus according to claim 7, wherein the refrigerant pipe is provided therein with heating wires along extensions of the pipe.

## Patentansprüche

1. Vorrichtung zur Regelung der Temperatur einer Batterie, umfassend:
mindestens einen Temperatursensor, der die Temperatur eines Batteriesatzes erfasst und ein Temperaturerfassungssignal erzeugt;
eine Kältemittelleitung, die sich unter mehreren in dem Batteriesatz aufgenommenen Batteriezellen erstreckt, um zu ermöglichen, dass ein übersättigtes flüssiges Kältemittel durch diese zirkuliert wird;
eine Kältemittelzirkulationsantriebseinheit, die das übersättigte flüssige Kältemittel durch die Kältemittelleitung zirkuliert, um den Batteriesatz nach einer Erhöhung der Temperatur des Batteriesatzes abzukühlen; und
eine Steuerung, die den Betrieb der Kältemittelzirkulationsantriebseinheit nach einer Erhöhung der Temperatur des Batteriesatzes als Antwort auf das Temperaturerfassungssignal des mindestens einen Temperatursensors zu steuert.

2. Vorrichtung nach Anspruch 1, wobei der mindestens eine Temperatursensor in einer Mehrzahl vorgesehen ist, um jeweilige Temperaturen der mehreren Batteriezellen individuell zu erfassen.

3. Vorrichtung nach Anspruch 2, wobei die Steuerung einen durchschnittlichen Temperaturwert aus mehreren jeweiligen, von den mehreren Temperatursensoren erzeugten Temperaturerfassungssignalen kalkuliert und eine Erhöhung der Temperatur des Batteriesatzes auf der Grundlage des durchschnittlichen Temperaturwerts erfasst.

4. Vorrichtung nach Anspruch 1, zusätzlich umfassend:
Auf/Zu-Ventile der Einlassseite und Auf/Zu-Ventile der Auslassseite, die an der Rohreinlassseite und der Rohrauslassseite von Verbindungen zwischen der Kältemittelzirkulationsantriebseinheit bzw. der Kältemittelleitung angeordnet sind; und
eine Mehrzahl von Auf/Zu-Ventilen, die jeweils an Eingangsseiten von Verlängerungen der unter den mehreren Batteriezellen sich erstreckenden Kältemittelleitung angeordnet sind.

5. Vorrichtung nach Anspruch 4, wobei die Steuerung mehrere aufeinanderfolgende Modi basierend auf der von dem Temperaturerfassungssignal des mindestens einen Temperatursensors erhaltenen Temperatur setzt und das Öffnen/Schließen des Auf/Zu-Ventils der Einlassseite, des Auf/Zu-Ventils der Auslassseite und der Mehrzahl von Auf/Zu-Ventilen entsprechend jedem der mehreren Modi individuell steuert.

6. Vorrichtung nach Anspruch 1, wobei das übersättigte flüssige Kältemittel eines aus einem Natriumacetat (CH₃COONa)-Lösung und einem Natriumthiosulfat (Na₂S₂O₃)-Lösung umfasst.

7. Vorrichtung zur Regelung der Temperatur einer Batterie, umfassend:
mindestens einen Temperatursensor, der eine Temperatur eines Batteriesatzes erfasst und ein Temperaturerfassungssignal erzeugt;
eine Kältemittelleitung, die sich unter mehreren in dem Batteriesatz aufgenommenen Batteriezellen erstreckt, um zu ermöglichen, dass ein übersättigtes flüssiges Kältemittel durch diese zirkuliert wird;
eine Kältemittelzirkulationsantriebseinheit, die das übersättigte flüssige Kältemittel auf ein Inneres der Kältemittelleitung überträgt, um den Batteriesatz nach einem Temperaturrückgang des Batteriesatzes durch Phasentransformation des übersättigten flüssigen Kältemittels vorzuheizen;
eine Einheit zum Anlegen eines elektrischen Schocks, welche eine elektrische Schockspannung auf die Kältemittelleitung anlegt, um eine statische Elektrizität zu erzeugen, durch welche das übersättigte flüssige Kältemittel aus einer flüssigen Phase in eine feste Phase zur Erzeugung von Wärme umgewandelt wird; und
eine Steuerung, die den Betrieb der Kältemittelzirkulationsantriebseinheit steuert und die Einheit zum Anlegen eines elektrischen Schocks dazu steuert, die elektrische Schockspannung nach Erfassen eines Rückgangs der Temperatur des Batteriesatzes als Antwort auf das Temperaturerfassungssignal des mindestens einen Temperatursensors zu erzeugen.

8. Vorrichtung nach Anspruch 7, wobei der mindestens eine Temperatursensor in einer Mehrzahl vorgesehen ist, um jeweilige Temperaturen der mehreren Batteriezellen individuell zu erfassen.

9. Vorrichtung nach Anspruch 8, wobei die Steuerung einen durchschnittlichen Temperaturwert aus mehreren von den mehreren Temperatursensoren erzeugten Temperaturerfassungssignalen kalkuliert und einen Rückgang der Temperatur des Batteriesatzes auf der Grundlage des durchschnittlichen Temperaturwerts erfasst.

10. Vorrichtung nach Anspruch 7, ferner umfassend:
Auf/Zu-Ventile der Einlassseite und Auf/Zu-Ventile der Auslassseite, die an der Rohreinlassseite und der Rohrauslassseite von Verbindungen zwischen der Kältemittelzirkulationsantriebseinheit bzw. der Kältemittelleitung angeordnet sind; und
eine Mehrheit von Auf/Zu-Ventilen, die jeweils an Eingangsseiten von Verlängerungen der unter den mehreren Batteriezellen sich erstreckenden Kältemittelleitung angeordnet sind.

11. Vorrichtung nach Anspruch 10, wobei die Steuerung mehrere aufeinanderfolgende Modi basierend auf der von dem Temperaturerfassungssignal des mindestens einen Temperatursensors erhaltenen Temperatur setzt und das Öffnen/Schließen des Ventils der Einlassseite, des Ventils der Auslassseite und der mehreren Auf/Zu-Ventile entsprechend jedem der Mehrzahl von Modi individuell steuert.

12. Vorrichtung nach Anspruch 7, wobei das übersättigte flüssige Kältemittel eines aus einem Natriumacetat (CH₃COONa)-Lösung und einem Natriumthiosulfat (Na₂S₂O₃)-Lösung umfasst.

13. Vorrichtung nach Anspruch 7, wobei die Kältemittelleitung darin mit Heizdrähten entlang von Verlängerungen der Rohrleitung versehen ist.

## Revendications

1. Dispositif de commande de la température d'une batterie, comprenant:
au moins un capteur de température pour la détection de la température d'un bloc de batterie et la génération d'un signal de détection de la température;
un tuyau de réfrigérant s'étendant entre plusieurs cellules de batterie contenues dans le bloc de batterie pour permettre un réfrigérant liquide sursaturé à circuler à travers celui-ci;
une unité d'entraînement de circulation du réfrigérant faisant circuler le réfrigérant liquide sursaturé à travers le tuyau de réfrigérant pour refroidir le bloc de batterie après une montée en température du bloc de batterie; et
un dispositif de commande commandant l'unité d'entraînement de circulation du réfrigérant pour fonctionner après la détection d'une montée en température du bloc de batterie en réponse au signal de détection de température provenant de l'au moins un capteur de température.

2. Dispositif selon la revendication 1, dans lequel l'au moins un capteur de température est prévu parmi plusieurs pour détecter individuellement des températures respectives de plusieurs cellules de batterie.

3. Dispositif selon la revendication 2, dans lequel le dispositif de commande calcule une valeur moyenne de la température à partir de plusieurs signaux respectifs de détection de la température générés par une pluralité de capteurs de température et détecte une montée en température du bloc de batterie en fonction de la valeur moyenne de la température.

4. Dispositif selon la revendication 1, comprenant en outre:
des vannes de marche-arrêt à côté d'entrée et à côté de sortie placées à des côtés d'entrée et de sortie du tuyau de connexions entre respectivement l'unité d'entraînement de circulation du réfrigérant et le tuyau de réfrigérant; et
une pluralité de vannes de marche-arrêt placées respectivement au niveau des côtés d'entrée des prolongements du tuyau de réfrigérant s'étendant entre les plusieurs cellules de batterie.

5. Dispositif selon la revendication 4, dans lequel le dispositif de commande définit plusieurs modes successifs en fonction de la température obtenue à partir du signal de détection de la température provenant de l'au moins un capteur de température et commande de manière individuelle l'ouverture/la fermeture de la vanne de marche-arrêt à côté d'entrée, de la vanne de marche-arrêt à côté de sortie et de la pluralité de vannes marche-arrêt en fonction de chacun des modes multiples.

6. Dispositif selon la revendication 1, dans lequel le réfrigérant liquide sursaturé comprend l'une d'une solution d'acétate de sodium (CH₃COONa) et d'une solution de thiosulfate de sodium (Na₂S₂O₃).

7. Dispositif de commande de la température d'une batterie, comprenant:
au moins un capteur de température pour la détection de la température d'un bloc de batterie et la génération d'un signal de détection de la température;
un tuyau de réfrigérant s'étendant entre plusieurs cellules de batterie contenues dans le bloc de batterie pour permettre un réfrigérant liquide sursaturé à circuler à travers celui-ci;
une unité d'entraînement de circulation du réfrigérant transmettant le réfrigérant liquide sursaturé vers l'intérieur du tuyau de réfrigérant pour le préchauffage du bloc de batterie par une transformation de phase du réfrigérant liquide sursaturé après un abaissement de la température du bloc de batterie;
une unité d'application de choc électrique appliquant une tension de choc électrique au tuyau de réfrigérant pour générer de l'électricité statique par laquelle le réfrigérant liquide sursaturé est transformé à partir d'une phase liquide à une phase solide pour générer une chaleur; et
un dispositif de commande commandant l'unité d'entraînement de circulation du réfrigérant pour faire fonctionner et commander l'unité d'application de choc électrique pour générer la tension de choc électrique après la détection d'une montée en température du bloc de batterie en réponse au signal de détection de température provenant de l'au moins un capteur de température.

8. Dispositif selon la revendication 7, dans lequel l'au moins un capteur de température est prévu parmi plusieurs pour détecter individuellement des températures respectives de plusieurs cellules de batterie.

9. Dispositif selon la revendication 8, dans lequel le dispositif de commande calcule une valeur moyenne de la température à partir de plusieurs signaux respectifs de détection de la température générés par une pluralité de capteurs de température et détecte un abaissement en température du bloc de batterie en fonction de la valeur moyenne de la température.

10. Dispositif selon la revendication 7, comprenant en outre:
des vannes de marche-arrêt à côté d'entrée et à côté de sortie placées à des côtés d'entrée et de sortie du tuyau de connexions entre respectivement l'unité d'entraînement de circulation du réfrigérant et le tuyau de réfrigérant; et
une pluralité de vannes de marche-arrêt placées respectivement au niveau des côtés d'entrée des prolongements du tuyau de réfrigérant s'étendant entre les plusieurs cellules de batterie.

11. Dispositif selon la revendication 10, dans lequel le dispositif de commande définit plusieurs modes successifs en fonction de la température obtenue à partir du signal de détection de la température provenant de l'au moins un capteur de température et commande de manière individuelle l'ouverture/la fermeture de la vanne de marche-arrêt à côté d'entrée, de la vanne de marche-arrêt à côté de sortie et de la pluralité de vannes marche-arrêt en fonction de chacun des modes multiples.

12. Dispositif selon la revendication 7, dans lequel le réfrigérant liquide sursaturé comprend l'une d'une solution d'acétate de sodium (CH₃COONa) et d'une solution de thiosulfate de sodium (Na₂S₂O₃).

13. Dispositif selon la revendication 7, dans lequel le tuyau de réfrigérant dans celui-ci est pourvue de fils chauffants le long des prolongements du tuyau.
